# EUROPEAN PATENT APPLICATION

(11) **EP 4 670 909 A1**
(43) Date of publication of application: **31.12.2025**
(21) Application number: 25186469.0
(22) Date of filing: 30.06.2025
(51) Int. Cl.: B23Q 17/00, G05B 19/401, B23Q 17/22, B28D 1/00

(54) **SYSTEM FOR DETECTING SURFACE OF A COATED CONDUCTIVE SUBSTRATE**

(30) Priority: 28.06.2024 US 202418758596
(71) Applicant: RTX Corporation, Farmington, CT 06032 (US)
(72) Inventor: KUCZEK, Andrzej E., Bristol, 06010 (US); BARRON, Alan C., Jupiter, 33458 (US); MARCHITTO, Edward, Canton, 06019 (US); WANG, Zhigang, South Windsor, 06074 (US)
(74) Representative: Dehns

(57) **Abstract**

A system (100) for detecting an edge of a substrate (110) comprises a coated assembly (150; ...; 650) including a conductive substrate (110; 410; 610) having an edge portion (125; 425; 625) and a dielectric coating (120; 420; 620) covering the edge portion (125; 425; 625) of the conductive substrate (110; 410; 610). The system (100) also includes a conductive tool (160; ...; 660) configured to interact with the coated assembly (150; ...; 650) and a substrate (110) sensing system (100). The substrate (110) sensing system (100) is configured to sense a change between an open configuration and a closed configuration of an electrical circuit (305) in which the conductive tool engages the conductive substrate.

## Description

### BACKGROUND

Dielectric materials are used to coat a variety of objects across different industries because of the electrical and thermal properties. For example, electronic components and systems, semiconductors and mechanical components, aerospace and automotive components, and medical devices, optical components and energy systems include dielectric coatings. The dielectric coatings, for example, insulate, protect and, at times, provides thermal properties to enhance the functionality or durability of the coated object.

Dielectric materials are, for example, applied to substrates (e.g., base or foundational materials) as a coating to envelope or cover the substrate. In examples, the dielectric material coats components to protect the underlying substrate from heat or electrical interferences. In other examples, the dielectric materials protect the underlying substrate from harsh environments. In yet other examples, dielectric coatings are applied to reduce friction or wear to the underlying substrate.

Mechanical machining processes involve the removal of material from a workpiece to achieve a desired shape, size, or finish. Mechanical machining is used in manufacturing in a wide variety of industries, including automotive, aerospace, and electronics. Machining involves removing material from a workpiece. Machining is used, for example, to form surfaces, recesses, textures, or the like in or on workpieces. Machining processes include, for example, turning, milling, drilling, grinding, boring, broaching, sawing, planning, and shaping, honing, or lapping. In each of these examples, at least some portion of the workpiece is removed to produce desired surfaces.

### SUMMARY

Edge finding is a step in the machining process that helps locate a border or the beginning/end of a workpiece. A workpiece is, for example, a material that is subjected to further manufacturing or machining steps to form a larger or more complete object. In examples, locating the edge of a workpiece involves identifying the location of the edges or other reference points of the workpiece relative to a machine's coordinate system. In some examples, a touch probe, an optical edge finder or a mechanical tool is used to find the edge of a workpiece. In other examples, the edge of a workpiece is found using manual methods, such as hand grinding, or the like. The touch probe can accurately identify the position of the workpiece and send a signal to the machine control system.

Edge finding is a used, at times, for workpieces with exposed and accessible surfaces. In some examples, one or more edges is visible. In other examples, one or more edge is covered, enveloped, or the like with a coating. For example, a system for detecting an edge of a substrate is used for materials that are coated with a dielectric material or other similar coating.

A coated assembly, for instance, includes a conductive substrate and a coating coupled along at least a portion including an edge portion of the conductive substrate. Optionally, the system for detecting an edge of the substrate utilizes the electrical resistivity of the conductive substrate as part of an electrical circuit. For example, a coated assembly includes the conductive substrate and the dielectric coating coupled along surfaces of the conductive substrate.

The system for detecting an edge of a substrate further includes a substrate sensing system that includes at least a power source coupled with a conductive tool, the coated assembly and the electrical circuit that includes the power source and the coated assembly. The substrate sensing system also includes, for example, a sensor that senses a change between an open circuit and a closed circuit. For instance, for the open circuit, the conductive tool is engaged with the coated assembly and disengaged from the conductive substrate. A closed circuit, for example, includes the conductive tool engaged with the conductive substrate, or positioned close to the conductive substrate.

According to a first aspect of the invention, a system for detecting an edge of a substrate comprises: a coated assembly including: a conductive substrate having at least one edge portion; and a dielectric coating coupled along the conductive substrate, the dielectric coating covering the at least one edge portion of the conductive substrate; a conductive tool configured to interact with the coated assembly; and a substrate sensing system including: a power source coupled with the conductive tool; the coated assembly; an electrical circuit including the power source and the coated assembly; and a sensor configured to sense a change between an open configuration and a closed configuration of the electrical circuit; wherein in the open configuration the conductive tool is either disengaged from the coated assembly or engaged with the coated assembly and disengaged from the conductive substrate; and wherein in the closed configuration the conductive tool is engaged with the conductive substrate.

According to another aspect of the invention, a machining assembly configured to detect a conductive substrate of a coated assembly comprises: a machining tool, the machining tool configured to be a component of an electrical circuit; wherein the machining tool includes an implement configured to cut, grind, or polish; and a substrate sensing system including: a power source coupled with the machining tool wherein the power source transmits an electric current through the machining tool; the electrical circuit including the power source and the coated assembly; and a sensor in communication with the machining tool and the coated assembly; wherein the sensor is configured to sense a change in a parameter of the electrical circuit according to machining of the coated assembly.

According to another aspect of the invention, a method of detecting an edge of a substrate, comprises: bracing a coated assembly relative to a conductive tool; wherein the coated assembly includes a conductive substrate and a coating coupled along at least an edge portion of the conductive substrate; positioning the conductive tool proximate to the coated assembly; transmitting an electrical current through the conductive tool; machining the coated assembly with the conductive tool; forming an electrical circuit between the coated assembly and the conductive tool; sensing with a sensor an electrical parameter of the electrical current; communicating the sensed electrical parameter to a control system; and determining a position of the conductive tool relative to the coated assembly based on the sensed electrical parameter.

### BRIEF DESCRIPTION OF THE DRAWINGS

Figure 1 illustrates a system for detecting an edge of a substrate according to at least one example of the present invention.
Figure 2 illustrates a system of detecting an edge of a substrate according to at least one example of the present invention.
Figure 3 illustrates an electrical circuit according to at least one example of the present invention.
Figure 4 illustrates a schematic of a coated assembly according to at least one example of the present invention.
Figures 5A and 5B illustrates a detection system according to at least one example of the present invention.
Figure 6 illustrates a system for a method of detecting an edge of a substrate according to at least one example of the present invention.

### DETAILED DESCRIPTION

Edge finding is one step in a machining process that can help locate an edge or border such as a beginning or end region of a workpiece, such as a substrate, which has been covered with one or more materials. In examples, identifying the exact location of one or more edges (e.g., borders, beginning regions, end regions of a workpiece) relative to the machine performing the machining process coordinates a system including at least the working tool and the workpiece. For instance, the edge of a workpiece is determined with a mechanical edge finder tool, optical edge finder tool, or a touch probe. For example, a touch probe is used to identify the position of the workpiece, or substrate, and communicate the coordinates of the workpiece to a machining tool.

In some examples, workpieces, such as substrates, are coated (e.g., covered, enveloped, surrounded or the like) with one or more materials. At times, a coating is coupled along the substrate and has an irregular thickness. The edges of the workpiece are optionally partially or completely obscured by a coating having an inconsistent thickness and locating an edge or edge region of the substrate can be difficult using an edge finding tool, touch probe or the like. Polymer, ceramic or thermal barrier coatings (TBC) are optionally used to coat substrates and, for example, have an inconsistent thickness upon application.

Finding the edge of a substrate coated with one or more of a polymer, ceramic or TBC is determined, at times, with manual removal of the coating material. For example, during a chamfering process understanding where an edge is located assists with accurately forming a chamfered edge portion including the coating. In examples, forming a chamfered edge portion on a coated assembly including a substrate coated with a polymer, ceramic or TBC coating is performed by hand or other manual processes. The process of removing the coating is laboriously performed until the edge or edge region of the substrate is identified.

The present inventors have recognized a method of locating an edge of a substrate coated with a non-conductive or dielectric coating, such as TBC, ceramic, glass, or polymer. In examples, an electrical circuit is formed between the coated assembly and a conductive tool. A sensor is positioned proximate to, for example, the conductive tool to sense a change in a signal (e.g., voltage, current, or capacitance). The sensor includes, for example, components of a system including a conductive tool and a coated assembly. The sensor, for example, detects, measures, or communicates information related to the resistivity of the system. The sensed change is used to determine an edge or edge region of the substrate.

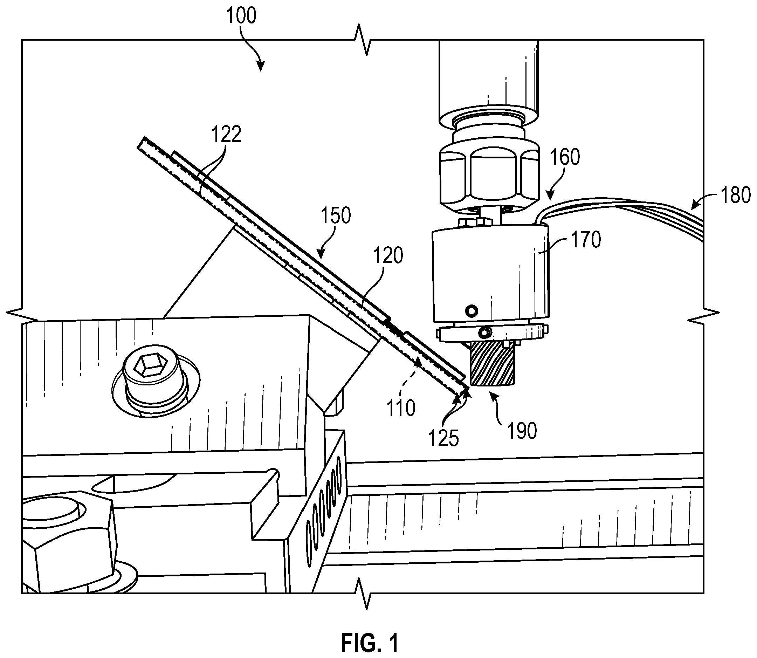

Illustrated in Figure 1 is an example of a system 100 for detecting an edge of a substrate 110. In examples, a coated assembly 150 is provided as a workpiece. The workpiece is, for example, a material, fixture, component or the like, that is in the process of being worked on to form a more complete object. In some examples, the workpiece is one part of a larger component. In another example, the workpiece is a completed material that is undergoing a finishing process.

Workpieces optionally include one or more metal sheets (e.g., layer, plate, panel or the like), a coated metal sheet or the like. In other examples, the workpiece includes glass, ceramics, or the like. In yet other examples, the one or more metal sheets are formed from a combination of materials. The workpiece can be formed from a conductive material such as copper, aluminum, nickel, lead, platinum, steel, or alloys of the like. For instance, the substrate 110 of the workpiece is formed from a conductive material, such as copper, aluminum, nickel, lead, platinum, steel, or alloys or the like.

The coated assembly 150 includes the substrate 110 with a coating 120 coupled (e.g., applied, adhered, enveloped) along at least one surface of the substrate 110. In examples, the coating 120 includes a non-conductive material. For example, the coating 120 formed from a non-conductive material (e.g., exhibits low conductivity relative to a metal). For example, the coating 120 includes a polymer, ceramic, or other dielectric material such as a thermal barrier coating (TBC). The coating 120 is coupled (e.g., applied, adhered, enveloped) with, one or more faces 122 of the substrate 110. The coating 120 can extend around or along one or more one edge portion 125 of the substrate 110. When the coating 120 extends around one or more edge portions 125 of the substrate, at times, the coating 120 covers at least a portion of one or more edge portions 125 such that the one or more edge portions 125 is not visible or readily ascertainable.

The coating 120 is applied to the substrate 110 to, for instance, provide a protective layer for the substrate 110. The coating 120, for example, protect the substrate 110 from heat or electrical interferences. **In** other examples, the coating 120 protect the substrate 110 from harsh environments such as a thermal barrier. **In** yet other examples, coating 120 reduces friction or wear to the substrate 110. In some examples, it is beneficial for the coating 120 to extend around substantially all of the one or more edge portions 125 of the substrate 110 to reduce damage to any exposed regions of the substrate 110 from the conditions mentioned above.

The system 100 includes a conductive tool 160 that, at times, interacts with the coated assembly 150. The conductive tool 160 includes an implement, for example a machining tool that, when in use, removes material from workpieces such as the coated assembly 150. For example, the conductive tool 160, as a machining tool, performs one or more of cutting, grinding, or polishing. The conductive tool 160 is, for example, one or more of a rotary file, carbide burr, grinder, drill or the like. In the system 100, the conductive tool 160 can remove at least a portion of the coating 120.

The conductive tool 160 for example includes an electromechanical device 170 that transmits power or electrical signals from a stationary structure to a rotating structure. For instance, the electromechanical device 170 is a slipring, a collector ring, rotary interfaces, or transformers or the like. In some examples, the electromechanical device 170 transmits power to or through the conductive tool 160. In some examples, the electromechanical device 170 transmits power or signals to the conductive tool 160 to operate the conductive tool 160.

In an example, the electromechanical device 170 is positioned relative to the conductive tool 160. For example, an inner rotating part of a slipring, as the electromechanical device 170, is electrically connected to a carbide burr as the conductive tool 160. The positioning of the electromechanical device 170 is positioned to, for example, transmit power from a power source 180 to the conductive tool 160. The power source 180 is positioned to, for example, transmit an electrical current through the conductive tool 160.

In an example, a sensor 190 can be positioned relative to one of the conductive tool 160 or the electromechanical device 170. The sensor 190 is optionally coupled with the conductive tool 160 or coupled with the electromechanical device 170. The sensor 190 in some examples is coupled with one or more of the conductive tool 160 and the coated assembly 150. The sensor 190 can detect or measure a change in electrical signals between the conductive tool 160 and the coated assembly 150. For example, the sensor 190 measures a change in resistivity such as a change in voltage, current or capacitance.

In examples, the sensor includes at least the conductive tool 160 and the coated assembly 150, where the coated assembly includes the substrate 110 and the coating 120. In some examples, the air or space between the coated assembly 150 and the conductive tool 160 is included in the sensor 190.

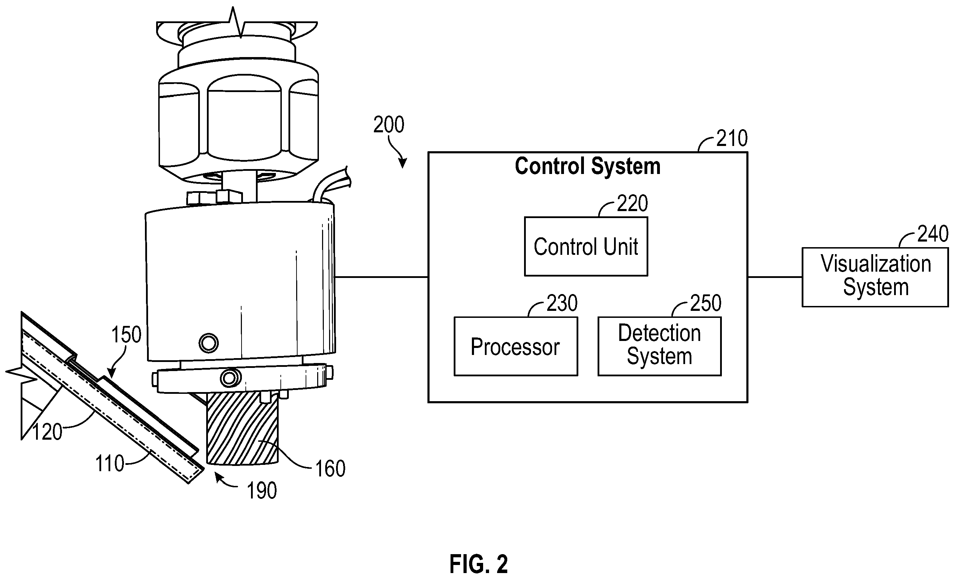

Figure 2 illustrates a system for detecting 200 the edge portion, or another portion, of a substrate. The control system 210 includes, for example a control unit 220, a processor 230, and a detection system 250. For example, the system for detecting 200 is designed to recognize when the conductive tool 160 breaches the coating 120 and contacts the substrate 110. The system for detecting 200 can be implemented for real-time detection (e.g., during operation of the conductive tool 160) and adjustment of a toolpath in machining processes. For example, the system for detecting 200 includes components and circuitry that can be implemented to identify, sense or measure a position of the conductive tool 160 relative to the coated assembly 150.

In some examples, the control system 210 communicates with the conductive tool 160 to automatically adjust the position of the conductive tool 160 relative to the coated assembly 150. In other examples, the control system 210 communicates with a user or operator the position of the conductive tool 160 relative to the coated assembly 150 and the operator manually, or through automation or mechanical means, adjusts the position of the conductive tool 160 relative to the coated assembly 150.

The system for detecting 200 includes, for example the sensor 190 in communication with a control system 210. In examples, the sensor 190 including, for example a resistivity sensor, a voltmeter, a multimeter or the like, is coupled with at least one of the coated assembly 150 and the conductive tool 160. In an example, the sensor 190 is in communication with the control system 210 where the sensed information related to the resistivity of the system for detecting an edge is received and processed.

In another example, the sensor 190 measures or detects a distance between the coated assembly 150 and the conductive tool 160. In some examples, the distance between the coated assembly 150 and the conductive tool 160 can be susceptible to ambient noise, and the resistivity of the system may not be accurately measured. The sensor 190 can measure or detect small distances such as distances less than 0.004 inches (0.102 millimeters). A small distance, such as less than 0.004 inches (0.102 millimeters) can allow a resistivity of the system to be sensed. In some examples with TBC as the coating 120 and the conductive tool 160, the sensor 190 sensed ambient noise in resistivity measurements in distances greater than 0.002 inches (0.051 millimeters).

The control system 210, for example includes a control unit 220 and a processor 230. The control system 210 is in communication with the conductive tool 160 to adjust the position relative to the coated assembly 150. For example, the control system 210 communicates with the conductive tool 160 to advance or retract the conductive tool 160 according to the relative position of the distance from the coated assembly 150.

The control system 210 includes a processor 230 in communication with, for example, the control unit 220 and the sensor 190. The processor 230 can receive communications or signals from the sensor 190 or the control unit 220. The communications from, for example, the sensor 190 can be communicated to the processor 230 to generate signals indicative of the position of the conductive tool 160 relative to the coated assembly 150. In another example, the processor 230 can transmit information to the control unit 220 so the control unit 220 can accurately position the conductive tool 160 relative to the coated assembly 150.

The control system 210, in another example, is in communication with a visualization system 240. The visualization system 240 can represents data communicated from the sensor 190 in a visual format to an operator or user. For example, the visualization system 240 can include graphical representations or real-time imagery of the distance between the conductive tool 160 and the coated assembly 150. In other examples, the visualization system 240 can include indicators that generate alerts when the conductive tool 160 is in contact with the coated assembly 150 or the substrate 110.

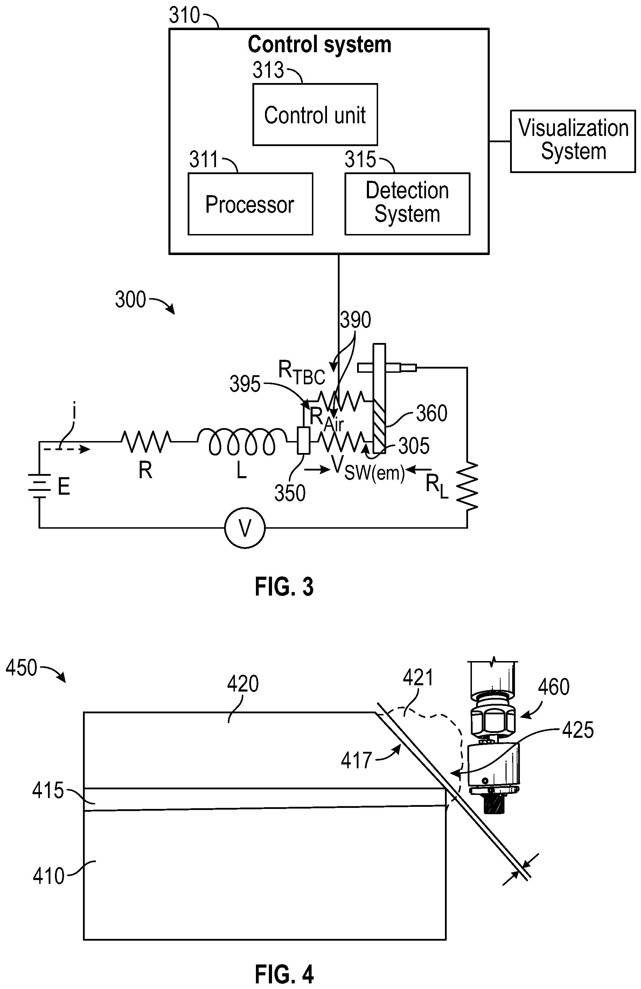

Illustrated in Figure 3 is a schematic representation of an electrical system 300 formed between a conductive tool 360 and a coated assembly 350. For example, the electrical system 300 includes circuitry coupled with the conductive tool 360 that supplies power or signals to the conductive tool 160. The electrical system 300 also includes, for example the coated assembly 350 where the coated assembly 350 includes a layer of a coating having non-conductive properties (e.g., conductivity less than a metal) and a substrate having conductive properties. The coated assembly 350 is, for example, similar to the coated assembly 150 discussed related to Figures 1 and 2. The substrate is, for example, a conductive substrate similar to the substrate 110 discussed related to Figures 1 and 2.

The conductive tool 360 is, for example, one terminal of an electrical circuit 305 and the coated assembly 350 is another terminal of the electrical circuit 305. For example, the coated assembly 350 interacts with an electrical current 395 from the conductive tool 360 during operation. Optionally, a sensor 390 includes the conductive tool 360 and the coated assembly. For example, the resistance of air and coating will change proportionally to the thickness of the coating or the air between the coated assembly 350 and the conductive tool 360. For instance, as the conductive tool 360 removes portions of the coating, the resistance between the conductive tool 360 and the coated assembly 350 will go down to the point at which the conductive tool 360 contacts the conductive substrate and the circuit is closed.

The one or more sensors 390 are, for example, designed to detect or sense a change in an electrical parameter of an electrical circuit 305 of the electrical system 300. The change in an electrical parameter, or an electrical component, can include a change in one or more of current, resistance or capacitance.

The one or more sensors 390 are, for example, in communication with a control system 310. The one or more sensors 390, for example, communicate the sensed electrical parameter (e.g., component of an electrical circuit) with the control system 310. In examples, the control system 310 receives data or signals related to the sensed electrical parameter and transmits the data to the processor 311. Upon receiving the data related to the sensed electrical parameter, the processor 311, for example, analyzes the data to determine if the sensed electrical parameter is within or outside of a predetermined range of measurement related to the sensed electrical parameter. For example, if the sensed parameter is a sensed resistance the predetermined range could be related to one of the current or voltage received by the sensor.

In an example, the electrical circuit 305 is an open circuit and a change is not detected, or only minimally detected, when the conductive tool 360 and the coated assembly 350 are separated from each other. In another example the electrical circuit 305 is an open circuit when the conductive tool 360 is in contact with the coating, such as a dielectric coating, on the coated assembly 350. In an open circuit configuration, the conductive tool 360 is, for example, engaged with the coated assembly but not engaged with the conductive substrate.

In another example, the electrical circuit 305 is a closed circuit and a change is detected by the one or more sensors 390 when the conductive tool 360 and the conductive substrate of coated assembly 350 are engaged. For example, at least a portion of the conductive tool 360 is in contact with at least a portion of the conductive substrate of the coated assembly 350. When the conductive tool 360 is engaged with at least a portion of the conductive substrate, the sensed change in the electrical parameter or electrical characteristic falls outside of a predetermined range.

For example, the electrical circuit 305 is a closed-loop control system that measures feedback received from the electrical circuit 305. This closed-loop system, for example, includes sensors and control systems so that during the machining process, such as the process of removing at least a portion of the coating (e.g., a dielectric coating), signals or sensed parameters are provided to indicate to the control system 310 when the conductive tool 360 has removed substantially all of the coating in the area the conductive tool 360 is machining.

For example, the processor 311, upon processing the sensed parameter (e.g., characteristic) communicates the sensed parameter with a detection system 315. The detection system 315 receives the sensed parameter data and determines if the electrical circuit 305 is an open circuit or a closed circuit. In other words, the detection system 315 can determine if the conductive tool 360 and the conductive substrate of the coated assembly 350 are in contact.

In an example, when the detection system 315 detects the coated assembly 350 and the conductive tool 360 are in contact, the detection system 315 can communicate with a controller 313 to provide an indication of the contact. The controller 313, for example, regulates or adjusts the position of the 360 accordingly. For example, if the controller 313 receives an indication that the coated assembly 350 and the conductive tool 360 are in contact, or engaged, the controller 313 can move the conductive tool 360 away from the coated assembly 350. Alternatively, the controller 313 communicates with the control system 310 to provide an indication to a user or operator that the conductive tool 360 is engaged with the conductive substrate of the 350.

In this example, this detection allows the 310 to precisely control the conductive tool 360 path. In some examples, understanding the location of the edge, as determined when the conductive tool 360 engages with the conductive substrate of the coated assembly 350, the control system 310 assists in reducing damage the coated assembly 350 by machining the coated assembly 350 too deeply.

Illustrated in Figure 4 is a schematic of a coated assembly 450 after machining by a conductive tool 460. For example, in Figure 4 a conductive tool 460 forms a chamfered surface 417. A chamfered surface is sometimes formed on conductive substrates such as parts for electronic components and systems, semiconductors and mechanical components, aerospace and automotive components, and medical devices, optical components and energy systems include dielectric coatings. The chamfered surface, for example prevents edge cracking or delamination by reducing the stress more evenly along an edge. In another example, a chamfered surface provides an increased surface area for adhesion of further coatings or attachment or fitting of other components. However, the chamfered surface should not impair or damage an underlying conductive substrate.

As illustrated in Figure 4, the coating 420, such as a dielectric coating, was applied to the edge portion 425 forming an irregular profile coating portion 421. Using a system, such as system for detecting 100, 200 an edge with the electrical system 300, as described related to Figures 1-3, respectively, a conductive tool (e.g., conductive tool 160, 360) can remove an irregular profile coating portion 421 until a point where the conductive tool 460 engages with the conductive substrate 410. Optionally, the conductive substrate 410 includes a bond coat 415 that adheres or couples the coating 420 with the conductive substrate 410. In an example, the conductive tool 460 ceases operation upon reaching the bond coat 415.

When the conductive tool 460 engages with one of the bond coat 415 or the conductive substrate 410, the electrical circuit 305 (as described related to Figure 3) is closed and the conductive tool 460 can disengage or cease operation. The electrical circuit 305 (as described related to Figure 3), can then communicate with the control unit (e.g., control system 210, 310) to indicate or map the edge portion 425 of the conductive substrate 410.

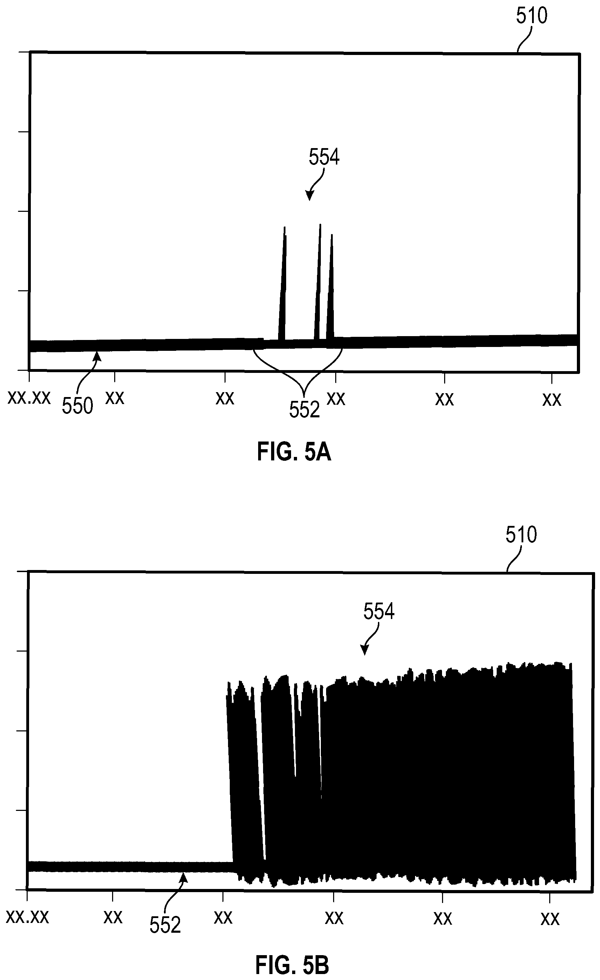

Illustrated in Figures 5A and 5B, are examples of the visualization system 510 as discussed related to Figures 2 and 3. In an example, the visualization system 510 graphically indicates a sensed parameter 550 of an electrical circuit, such as the electrical circuit discussed related to Figure 3. In an example, the visualization system 510 is coupled with an oscilloscope and the visualization system 510 visually indicates a readout of the oscilloscope. The oscilloscope, for example, measures the voltage readout, as the sensed parameter 550, related to the electrical circuit (such as electrical circuit 305).

In examples, the sensed parameter 550 can include ambient noise 552. The ambient noise 552 or no signal (e.g., a clean sensor signal) from the sensor (e.g., sensor 190, 390), via the control system (e.g., control system 210, 310), is indicative of the conductive tool being spaced from the conductive substrate. In another example, the ambient noise 552 or no signal from the sensor (e.g., sensor 190, 390), via the control system (e.g., control system 210, 310) is indicative of the conductive tool engaging with the coating, such as a dielectric coating and not the conductive substrate.

As indicated in Figures 5A and 5B, when the conductive tool is in contact, or engaged with the conductive substrate, there is, for example, a fluctuation 554 in the visual or graphical representation of the sense parameter (as communicated through the control system). The fluctuation 554 in the visual or graphical representation of the sensed parameter is, for example, an indication the conductive tool is engaged or in contact with the conductive substrate. For example, the fluctuation 554 is an indication that a closed circuit (as described related to Figure 3) has been formed between the conductive tool and the conductive substrate. For example, the conductive substrate has removed the coating to a depth that there is minimal if any of the coating at the location where the conductive tool is performing its machining operations.

Illustrated in Figure 5A is an example of incidental contact. For example, the conductive tool is in contact with the conductive substrate for a short amount of time, compared to the time the conductive tool is in contact with the conductive substrate. Illustrated in Figure 5B is an example of the conductive tool being in contact with the conductive substrate for an extended amount of time, such as the conductive tool is proceeding too far into the conductive substrate, or the conductive tool is engaged along the edge portion of the conductive substrate for a longer distance than specified.

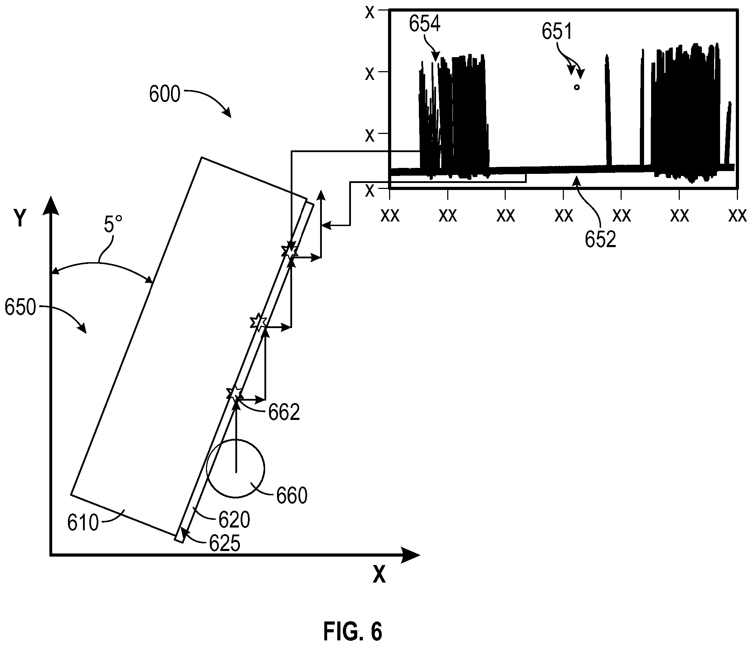

Illustrated in Figure 6 is an example of a method of detecting an edge of a substrate. For example, a system for detecting an edge of a substrate 600 includes a coated assembly 650 that can be braced or held in place for a machining operation. The coated assembly 650 is braced relative to a conductive tool 660. The conductive tool 660 is a tool that is designed to remove material from the coated assembly 650. In an example, the coated assembly 650 includes a coating 620, such as a dielectric coating or a nonconductive coating, coupled along at least an edge portion 625 of a conductive substrate 610.

The conductive tool 660 is, for example, positioned relative to the coated assembly 650. For instance, the conductive tool 660 is positioned proximate to the coated assembly 650 to begin a machining operation. When the machining operation commences, an electrical current is transmitted through the conductive tool 660. In an example, one or more sensors are positioned relative to the conductive tool 660 and the sensors detect, sense or the like, parameters or components of an electrical circuit that is formed between the conductive tool 660 and the coated assembly 650.

In an example, parameter or components of the electrical circuit are sensed and communicated to a control system. The control system can then process the sensed information received from the sensors. The processor, optionally, is in communication with a detection system. The detection system receives the processed information to determine the location of the conductive tool 660 relative to the coated assembly. In examples, the detection system determines the position of the conductive tool 660 relative to the conductive substrate 610 when the electrical circuit is a closed electrical circuit. Optionally, the detection system considers the environmental conditions in which the system for detecting an edge of a substrate 600 is operating. For example, a change in the quality of the air (e.g., humidity, temperature, or the like) can affect the resistivity of the system for detecting an edge of a substrate 600.

As the conductive tool 660 moves and begins to cut through the coating 620, the conductive tool 660 can contact 662 or engage with the conductive substrate 610 beneath. This contact 662 closes the electrical circuit. In some examples, contact 662, and closing the circuit, can include the conductive tool 660 minimally spaced from the conductive substrate 610. For example, the conductive tool 660 is less than 0.004 inches (0.102 millimeters) from the conductive substrate 610. When the detection system determines the conductive tool 660 is in contact 652 with or engaging with the coated assembly 650, the control system communicates with, for example, the visualization system to provide an indication, such as a fluctuation 654 in a graphical indication of a sensed parameter 651, that the conductive tool 660 is in contact 652 or engaged with the coated assembly 650.

The control system can communicate with a control unit to indicate that a user can move the conductive tool 660 away from the coated assembly 650. In another example, the control system can communicate with a control until to automatically move the conductive tool 660 away from the coated assembly 650. The control system can also communicate with the processor the location of the conductive tool 660 to store or record the position of the conductive tool 660 as part of a mapping operation, or a tool path, of the control system. By automatically adjusting the toolpath, the system, for example, reduces manual intervention or operation of the method of detecting an edge of the conductive substrate.

### ASPECTS OF THE INVENTION

Aspect 1 can include subject matter such as a system for detecting an edge of a substrate, comprising: a coated assembly including: a conductive substrate having at least one edge portion; and a dielectric coating coupled along the conductive substrate, the dielectric coating covering the at least one edge portion of the conductive substrate; a conductive tool configured to interact with the coated assembly; and a substrate sensing system including: a power source coupled with the conductive tool; the coated assembly; and an electrical circuit including the power source and the coated assembly; a sensor configured to sense a change between an open configuration and a closed configuration of the electrical circuit; wherein in the open configuration the conductive tool is either disengaged from the coated assembly or engaged with the coated assembly and disengaged from the conductive substrate; and wherein in the closed configuration the conductive tool is engaged with the conductive substrate.

Aspect 2 can include, or can optionally be combined with the subject matter of Aspect 1, to optionally include the dielectric coating includes one or more of a polymer, a ceramic, a glass or a thermal barrier coating.

Aspect 3 can include, or can optionally be combined with the subject matter of one or any combination of Aspects 1 or 2 to optionally include the conductive tool includes an implement configured to cut, grind, or polish the coated assembly; wherein the conductive tool is configured to remove at least a portion of the dielectric coating.

Aspect 4 can include, or can optionally be combined with the subject matter of one or any combination of Aspects 1 to 3 to optionally include a controller; wherein the controller is programmed to receive signals from the sensor regarding a change in an electrical parameter.

Aspect 5 can include, or can optionally be combined with the subject matter of one or any combination of Aspects 1 to 4 to optionally include a processor; wherein the processor is configured to determine a position of the edge of the substrate based the sensed changed in an electrical parameter; and wherein the sensed change in the parameter indicates of a position of the conductive tool relative to the coated assembly.

Aspect 6 can include, or can optionally be combined with the subject matter of one or any combination of Aspects 1 to 5 to optionally include a control unit configured to be coupled with the conductive tool and the sensor; wherein the control unit is configured to control a position of the conductive tool relative to the coated assembly.

Aspect 7 can include, or can optionally be combined with the subject matter of one or any combination of Aspects 1 to 6 to optionally include a control system, the control system including: a control unit configured to receive signals from the sensor regarding the change in an electrical parameter; a processor in communication with the controller configured to determine a position of the conductive tool relative to the substrate based on the signals; and a detection system in communication with the processor, wherein the detection system is configured to detect closure of the electrical circuit when the processor determines the conductive tool is in contact with the substrate.

Aspect 8 can include subject matter such as machining assembly configured to detect a conductive substrate of a coated assembly, comprising: a machining tool, the machining tool is configured to be a component of an electrical circuit; wherein the machining tool includes an implement configured to cut, grind, or polish; a substrate sensing system including: a power source coupled with the machining tool wherein the power source transmits an electric current through the machining tool; the electrical circuit including the power source and the coated assembly; and a sensor in communication with the machining tool and the substrate; wherein the sensor is configured to sense a change in a parameter of the electrical current according to machining of the coated assembly.

Aspect 9 can include, or can optionally be combined with the subject matter of one or any combination of Aspects 8 to optionally include the component of the electrical current includes one or more of current, resistance or capacitance.

Aspect 10 can include, or can optionally be combined with the subject matter of one or any combination of Aspects 9 or 10 to optionally include the machining tool is configured to remove a portion of a dielectric coating from the conductive substrate.

Aspect 11 can include, or can optionally be combined with the subject matter of one or any combination of Aspects 8 to 10 to optionally include a conductive substrate; and a dielectric coating; wherein the machining tool is configured to be positioned relative to a coated assembly according to the change in the component of the electrical current.

Aspect 12 can include, or can optionally be combined with the subject matter of one or any combination of Aspects 8 to 11 to optionally include a detection system, the detection system includes: a processor configured to receive signals from the sensor; wherein the processor is configured to determine a position of an edge of the conductive substrate based on the sensed change in the parameter.

Aspect 13 can include subject matter such as a method of detecting an edge of a substrate, comprising: bracing a coated assembly relative to a conductive tool; wherein the coated assembly includes a conductive substrate and a coating coupled along at least an edge portion of the conductive substrate; positioning the conductive tool proximate to the coated assembly; transmitting an electrical current through the conductive tool; machining the coated assembly with the conductive tool; forming an electrical circuit between the coated assembly and the conductive tool; sensing with a sensor an electrical parameter of the electrical current; communicating the sensed electrical parameter to a control system; and determining a position of the conductive tool relative to the coated assembly based on the sensed electrical parameter.

Aspect 14 can include, or can optionally be combined with the subject matter of one or any combination of Aspects 13 to optionally include forming a closed electrical circuit when the conductive tool is in contact with the conductive substrate.

Aspect 15 can include, or can optionally be combined with the subject matter of one or any combination of Aspects 13 or 14 to optionally include detecting a closure of the electrical circuit when the conductive tool contacts the conductive substrate.

Aspect 16 can include, or can optionally be combined with the subject matter of one or any combination of Aspects 13 to 15 to optionally include the sensor is coupled with the conductive tool and the coated assembly.

Aspect 17 can include, or can optionally be combined with the subject matter of one or any combination of Aspects 13 to 16 to optionally include communicating with the control system a location of the conductive tool when a closed electrical circuit is formed between the conductive tool and the conductive substrate; and recording with a processor the location of the conductive tool.

Aspect 18 can include, or can optionally be combined with the subject matter of one or any combination of Aspects 13 to 17 to optionally include sensing an open circuit when the conductive tool is in contact with the coating or not in contact with the coating.

Aspect 19 can include, or can optionally be combined with the subject matter of one or any combination of Aspects 13 to 18 to optionally include ceasing machining the coated assembly when a process determines the electrical circuit is closed.

Aspect 20 can include, or can optionally be combined with the subject matter of one or any combination of Aspects 13 to 19 to optionally include adjusting a toolpath of the conductive tool based on the position of the conductive tool relative to the conductive substrate.

The above description includes references to the accompanying drawings, which form a part of the detailed description. The drawings show, by way of illustration, specific embodiments in which the invention can be practiced. These embodiments are also referred to herein as "aspects" or "examples." Such aspects or example can include elements in addition to those shown or described. However, the present inventors also contemplate aspects or examples in which only those elements shown or described are provided. Moreover, the present inventors also contemplate aspects or examples using any combination or permutation of those elements shown or described (or one or more features thereof), either with respect to a particular aspects or examples (or one or more features thereof), or with respect to other Aspects (or one or more features thereof) shown or described herein.

In the event of inconsistent usages between this document and any documents so incorporated by reference, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

Geometric terms, such as "parallel," "perpendicular", "round", or "square", are not intended to require absolute mathematical precision, unless the context indicates otherwise. Instead, such geometric terms allow for variations due to manufacturing or equivalent functions. For example, if an element is described as "round" or "generally round," a component that is not precisely circular (e.g., one that is slightly oblong or is a many-sided polygon) is still encompassed by this description.

The above description is intended to be illustrative, and not restrictive. For example, the above-described aspects or examples (or one or more aspects thereof) may be used in combination with each other. Other embodiments can be used, such as by one of ordinary skill in the art upon reviewing the above description. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as aspects, examples, or embodiments, with each claim standing on its own as a separate embodiment, and it is contemplated that such embodiments can be combined with each other in various combinations or permutations. The scope of the invention should be determined with reference to the appended claims, along with the full scope of equivalents to which such claims are entitled.

## Claims

1. A system (100) for detecting an edge of a conductive substrate (110), comprising:
a coated assembly (150; 350; 450; 650) including:
a conductive substrate (110; 410; 610) having at least one edge portion (125; 425; 625); and
a dielectric coating (120; 420; 620) coupled along the conductive substrate (110; 410; 610), the dielectric coating (120; 420; 620) covering the at least one edge portion (125; 425; 625) of the conductive substrate (110; 410; 610);
a conductive tool (160; 360; 460; 660) configured to interact with the coated assembly (150; ...; 650); and
a substrate sensing system (300) including:
a power source (180) coupled with the conductive tool (160; ...; 660) and forming an electrical circuit (305) with the coated assembly (150; ...; 650); and
a sensor (190; 390) configured to sense a change between an open configuration and a closed configuration of the electrical circuit (305), wherein:
in the open configuration, the conductive tool (160; ...; 660) is either disengaged from the coated assembly (150; ...; 650), or engaged with the coated assembly (150; ...; 650) and disengaged from the conductive substrate (110; 410; 610); and
in the closed configuration, the conductive tool (160; ...; 660) is engaged with the conductive substrate (110; 410; 610).

2. The system (100) of claim 1, wherein the dielectric coating (120; 420; 620) includes one or more of a polymer, a ceramic, a glass or a thermal barrier coating (120; 420; 620).

3. The system (100) of claim 1 or 2, wherein:
the conductive tool (160; ...; 660) includes an implement configured to cut, grind, or polish the coated assembly (150; ...; 650); and
the conductive tool (160; ...; 660) is configured to remove at least a portion of the dielectric coating (120; 420; 620).

4. The system (100) of any preceding claim, including a controller (313), wherein the controller (313) is programmed to receive signals from the sensor (190; 390) regarding a change in an electrical parameter.

5. The system (100) of any preceding claim, including a processor (230; 311), wherein:
the processor (230; 311) is configured to determine a position of the edge of the conductive substrate (110; 410; 610) based on the sensed changed in an electrical parameter; and
the sensed change of a parameter indicates a position of the conductive tool (160; ...; 660) relative to the coated assembly (150; ...; 650).

6. The system (100) of any preceding claim, including a control unit (220) configured to be coupled with the conductive tool (160; ...; 660) and the sensor (190; 390), wherein the control unit (220) is configured to control a position of the conductive tool (160; ...; 660) relative to the coated assembly (150; ...; 650).

7. The system (100) of any preceding claim, including a control system (210; 310), the control system (210; 310) including:
a control unit (220) configured to receive signals from the sensor (190; 390) regarding the change in an electrical parameter;
a processor (230; 311) in communication with the control unit (220) configured to determine a position of the conductive tool (160; ...; 660) relative to the conductive substrate (110) based on the signals; and
a detection system (250; 315) in communication with the processor (230; 311), wherein the detection system (250; 315) is configured to detect closure of the electrical circuit (305) when the processor (230; 311) determines the conductive tool (160; ...; 660) is in contact with the conductive substrate (110; 410; 610).

8. A machining assembly configured to detect a conductive substrate (110; 410; 610) of a coated assembly (150; 350; 450; 650), comprising:
a machining tool (160; 360; 460; 660), the machining tool configured to be a component of an electrical circuit (305), wherein the machining tool (160; ...; 660) includes an implement configured to cut, grind, or polish; and
a substrate sensing system (300) including:
a power source (180) coupled with the machining tool (160; ...; 660), wherein the power source (180) transmits an electric current through the machining tool (160; ...; 660), and the electrical circuit (305) includes the power source (180); and
a sensor (190; 390) in communication with the machining tool (160; ...; 660), wherein the sensor (190; 390) is configured to sense a change in a parameter of the electrical circuit (305),
optionally wherein:
the parameter of the electrical circuit (305) includes one or more of current, resistance or capacitance;
the machining tool (160; ...; 660) is configured to remove a portion of a dielectric coating (120; 420; 620) from the conductive substrate (110; 410; 610);
the machining assembly comprises the coated assembly (150; ...; 650), wherein the coated assembly (150; ...; 650) includes a conductive substrate (110; 410; 610) and a dielectric coating (120; 420; 620), and the machining tool (160; ...; 660) is configured to be positioned relative to a coated assembly (150; ...; 650) according to the change in the parameter of the electrical circuit (305); and/or
the machining assembly includes a detection system (250; 315), wherein the detection system (250; 315) includes a processor (230; 311) configured to receive signals from the sensor (190; 390), and the processor (230; 311) is configured to determine a position of an edge of the conductive substrate (110; 410; 610) based on the sensed change in the parameter.

9. A method of detecting an edge of a substrate (110), comprising:
bracing a coated assembly (150; 350; 450; 650) relative to a conductive tool (160; ...; 660), wherein the coated assembly (150; ...; 650) includes a conductive substrate (110; 410; 610) and a coating (120; 420; 620) coupled along at least an edge portion (125; 425; 625) of the conductive substrate (110; 410; 610);
positioning the conductive tool (160; ...; 660) proximate to the coated assembly (150; ...; 650);
transmitting an electrical current (395) through the conductive tool (160; ...; 660);
machining the coated assembly (150; ...; 650) with the conductive tool (160; ...; 660);
forming an electrical circuit (305) between the coated assembly (150; ...; 650) and the conductive tool (160; ...; 660);
sensing with a sensor (190; 390) an electrical parameter of the electrical current (395);
communicating the sensed electrical parameter to a control system (210; 310); and
determining a position of the conductive tool (160; ...; 660) relative to the coated assembly (150; ...; 650) based on the sensed electrical parameter.

10. The method of claim 9, including forming a closed electrical circuit (305) when the conductive tool (160; ...; 660) is in contact (662; 652) with the conductive substrate (110; 410; 610).

11. The method of claim 9 or 10, including detecting a closure of the electrical circuit (305) when the conductive tool (160; ...; 660) contacts the conductive substrate (110; 410; 610).

12. The method of any of claim 9 to 11, wherein the sensor (190; 390) is coupled with the conductive tool (160; ...; 660) and the coated assembly (150; ...; 650).

13. The method of any of claims 9 to 12, including:
communicating with the control system (210; 310) a location of the conductive tool (160; ...; 660) when a closed electrical circuit (305) is formed between the conductive tool (160; ...; 660) and the conductive substrate (110; 410; 610); and
recording with a processor (230; 311) the location of the conductive tool (160; ...; 660).

14. The method of any of claims 9 to 13, including sensing an open circuit when the conductive tool (160; ...; 660) is in contact (662; 652) with the coating (120; 420; 620) or not in contact (662; 652) with the coating (120; 420; 620), optionally wherein the method includes ceasing machining the coated assembly (150; ...; 650) when a process determines the electrical circuit (305) is closed.

15. The method of any of claims 9 to 14, including adjusting a toolpath of the conductive tool (160; ...; 660) based on the position of the conductive tool (160; ...; 660) relative to the conductive substrate (110; 410; 610).
